Europäisches Patentamt

(19) European Patent Office

Office européen des brevets

(11) Numéro de publication: **0014123**
**A2**

(12) **DEMANDE DE BREVET EUROPEEN**

(21) Numéro de dépôt: **80400052.9**

(22) Date de dépôt: **15.01.80**

(51) Int. Cl.³: **F 16 L 23/02**

(30) Priorité: **17.01.79 FR 7901104**
**12.12.79 FR 7930477**

(71) Demandeur: **Société Anonyme dite: AERAULIQUE
CONSTRUCTION, Bld Jean-Moulin Z.I. Sud,
F-21800 Chevigny-Saint-Sauveur (FR)**

(43) Date de publication de la demande: **06.08.80
Bulletin 80/16**

(72) Inventeur: **Didiot, John Jean Denis, 58 rue du Faubourg
St. Martin, F-21121 Fontaine Les Dijon (FR)**

(84) Etats contractants désignés: **AT BE CH DE GB IT LU NL
SE**

(74) Mandataire: **Bonnetat, Christian, Cabinet PROPI
Conseils 23 rue de Léningrad, F-75008 Paris (FR)**

(54) Procédé et dispositif pour le raccord de tronçons de gaine de circulation de fluide.

㊄7 Procédé pour le raccord de deux tronçons (1, 2) de gaine de circulation de fluide par mise en place sur les extrémités en regard des tronçons à réunir de brides formées par des cadres (11, 12) constitués de profilés creux (13) et de pièces d'angles (14) en forme d'équerre, dont les branches sont introduites dans deux profilés consécutifs, puis par solidarisation des pièces d'angle en regard des deux brides.

Selon l'invention, ce procédé est caractérisé en ce que les pièces d'angles (14) sont solidaires du tronçon de gaine (1, 2) correspondant, alors que lesdits profilés (13) ne sont pas fixés sur les tronçons de gaine.

Raccord de tronçons de gaine de circulation de fluide.

Procédé et dispositif pour le raccord de tronçons de gaine
de circulation de fluide.

La présente invention concerne un procédé et un dispositif pour
le raccord de tronçons de gaine de circulation de fluide,
notamment d'air pulsé.

On sait que les gaines de transport d'air industriel à haute
pression sont en tôle pliée et présentent une section rectangulaire ou carrée et que, pour raccorder de façon étanche
les extrémités en regard de deux tronçons d'une telle gaine, on
commence de façon connue, par réaliser deux brides, puis
chacune de celles-ci est fixée sur une des extrémités de gaine,
après quoi lesdites brides sont assemblées l'une à l'autre. Dans
cette technique antérieure, chaque bride est constituée d'un
cadre de forme rectangulaire ou carrée correspondant à la
section de la gaine, tandis que chaque cadre comporte des côtés
formés de profilés creux et des pièces d'angle en forme d'équerre, dont les branches sont introduites à coulissement dans les
profilés de deux côtés consécutifs. Lorsque les cadres sont
ainsi formés, on les met respectivement en place sur la périphérie extérieure de l'extrémité de gaine correspondante, puis
l'on fixe, par exemple par soudure, les profilés sur les faces
de la gaine, après quoi les deux cadres sont assemblés l'un à
l'autre par rapprochement et solidarisation des pièces d'angle,
par exemple au moyen de boulons traversants passant à travers
des trous en regard prévus dans deux pièces d'angle disposées
l'une en face de l'autre.

Ainsi, dans les gaines connues, les tronçons sont assemblés
les uns aux autres par l'intermédiaire des pièces d'angle qui,

0014123

elles, ne sont rendues solidaires des tronçons de gaine que par introduction de leurs branches dans des profilés, qui à leur tour sont fixés auxdits tronçons. Il en résulte donc une mauvaise transmission des efforts entre deux tronçons de gaine consécutifs. De plus, étant donné que généralement les gaines sont en tôle galvanisée, les points de soudure des profilés des brides sur les tronçons de gaine sont autant d'amorces de corrosion de ceux-ci.

La présente invention a pour objet de remédier à ces inconvénients.

A cette fin, selon l'invention, le procédé pour le raccord de deux tronçons de gaine de circulation de fluide par mise en place sur les extrémités en regard des tronçons à réunir de brides formées par des cadres constitués de profilés creux et de pièces d'angle en forme d'équerre, dont les branches sont introduites dans deux profilés consécutifs, puis par solidarisation des pièces d'angle en regard de deux brides, est remarquable en ce que les pièces d'angles sont solidaires du tronçon de gaine correspondant, alors que lesdits profilés ne sont pas fixés sur les tronçons de gaine.

Ainsi, selon l'invention, les tronçons de gaine sont raccordés par solidarisation des pièces d'angle, qui sont elles-mêmes solidaires des tronçons de gaine. La transmission des efforts mécaniques entre les deux tronçons de gaine est donc excellente.

Pour la mise en oeuvre du procédé selon l'invention, les pièces d'angle doivent comporter des moyens , par exemple des pattes, permettant une solidarisation sur les tronçons de gaines par exemple, par soudure, boulonnage, etc... De telles pattes peuvent s'appliquer à plat sur les faces extérieures des tronçons de gaine.

De façon connue, chaque profilé creux formant un côté des brides peut comporter une fente longitudinale dans laquelle est introduite l'extrémité de la face de tronçon de gaine correspondante, de façon que chaque bride se trouve à cheval sur le bord de l'ouverture du tronçon de gaine correspondant.

On peut indiquer plusieurs profilés avantageux destinés à former les côtés des cadres des brides de raccordement. Notamment, dans un mode de réalisation avantageux, lesdits profilés comportent, en section, une première aile venant s'appliquer sur la face intérieure d'un tronçon de gaine, une seconde aile reliée à la première par un coude à 180°, qui sert de butée au bord de la gaine, et appliquée sur la face extérieure dudit tronçon de gaine, une troisième aile au moins sensiblement orthogonale auxdites première et seconde ailes et une partie prolongeant la troisième aile et ménageant un espace intérieur pour recevoir les branches des pièces d'angle.

Selon une variante préférée de l'invention, un profilé de ce type présente deux fentes d'introduction parallèles, mais d'entrées opposées. Ainsi, si avec de telles gaines de circulation de fluide, il est nécessaire d'agencer un revêtement de calorifugeage, on peut le faire facilement, sans prévoir de système de fixation particulier, ni perçage spéciaux. On évite ainsi des opérations malcommodes et des frais importants de montage.

Une telle variante de réalisation est remarquable en ce que ledit profilé comporte de plus une quatrième aile, au moins sensiblement parallèle auxdites première et seconde ailes, et reliée à ladite seconde aile, du côté opposé audit premier coude, par un second coude au moins approximativement à 180°, lesdits premier et second coudes étant de sens opposés, tandis que la troisième aile est reliée à ladite quatrième aile, du côté opposé audit second coude, par un troisième coude au moins approximativement à 90° , ce troisième coude étant de sens opposé audit second coude.

On obtient ainsi, entre la seconde et quatrième ailes une fente ouverte vers l'extérieur du tronçon de gaine, susceptible lorsque cela est nécessaire, de servir de moyen d'encliquetage à un élément maintenant un revêtement de calorifugeage. Ainsi, il devient facile de disposer un calorifugeage intérieur aux gaines, en montant des plaques calorifuges à l'intérieur de celles-ci et en fixant leurs éléments de support sur les profilés des brides. A cet effet, le dispositif comporte de plus des profilés susceptibles de maintenir les bords transversaux de plaques de matière calorifuge appliquées contre les faces intérieures du tronçon de gaine et de venir s'introduire dans la fente ménagée entre la seconde et la quatrième aile, pour solidariser lesdites plaques desdits tronçons de gaine.

Les figures du dessin annexé feront bien comprendre comment l'invention peut être réalisée.

La figure 1 est une vue en perspective illustrant le procédé selon l'invention.

Les figures 2 et 3 montrent , respectivement de face et du dessus, un premier exemple de réalisation de pièce d'angle.

La figure 4 est une coupe suivant la ligne IV-IV de la figure 1.

Les figures 5 et 6 montrent, respectivement de face et de dessus, un second exemple de réalisation de pièce d'angle.

La figure 7 est une coupe correspondant à la ligne IV-IV de la figure 1 appliquée à la pièce d'angle des figures 5 et 6.

La figure 8 montre en coupe un mode de réalisation du profilé destiné à constituer les côtés des cadres d'assemblage.

La figure 9 est une vue partielle, de l'avant et en perspective, d'une extrémité d'un tronçon de gaine de ventilation équipé d'un dispositif de raccord préféré selon l'invention.

La figure 10 est une vue partielle, de l'arrière et en perspective, du dispositif de raccord monté sur le tronçon de gaine de la figure 9.

La figure 11 est une vue en coupe selon la ligne XI-XI de la figure 10, montrant en coupe le profilé formant le cadre des brides de raccord et illustrant la pose d'un revêtement de calorifugeage.

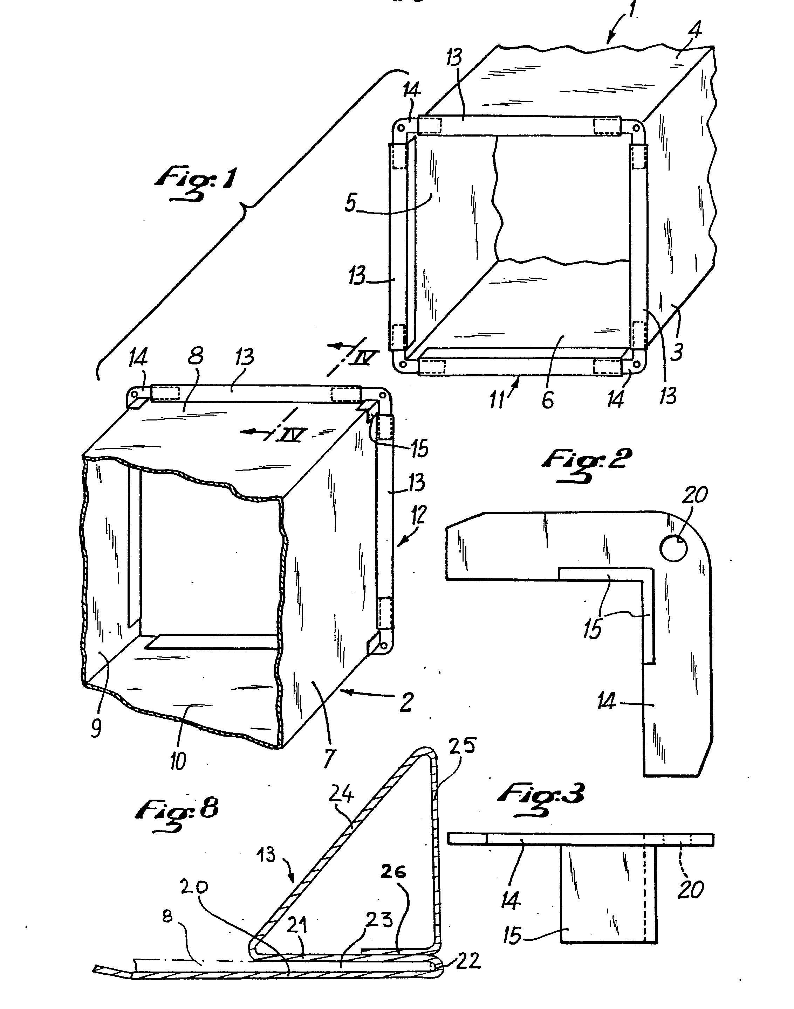

La figure 1 montre deux tronçons 1 et 2 de gaine de circulation de fluide à raccorder. Les tronçons 1 et 2 présentent une section rectangulaire et comportent chacun quatre faces planes 3,4,5,6 et 7,8,9,10, respectivement.

Pour raccorder de façon étanche les tronçons 1 et 2, on met en place sur l'extrémité de chacun d'eux un cadre 11 ou 12 respectivement. Chaque cadre 11 et 12 est constitué de côtés 13 et de pièces d'angle 14.

Les côtés 13 sont des profilés creux et les pièces d'angle 14 présentent la forme d'équerres, les branches de celles-ci étant engagées dans deux côtés 13 consécutifs.

Dans le mode de réalisation des figures 1 à 4, les pièces d'angle 14 comportent des languettes 15 s'étendant sur une partie de la longueur de leurs branches à partir de leur angle et susceptibles de s'appliquer sur l'extrémité de faces 3 à 10, pour y être fixées, par exemple par soudure, boulonnage, etc... Les profilés 13 ne sont pas fixés sur lesdites faces 3 à 10.

Dans ce cas, comme le montrent les figures 1 et 4, seule l'extrémité des branches des équerres 14 extérieures aux languettes 15 peut être introduite dans les profilés 13. La cavité intérieure desdits profilés peut alors présenter une section rectangulaire correspondant à celle des branches des équerres 14.

Comme le montre la figure 4, la section des profilés 13 comporte une première aile 16 venant s'appliquer sur le côté intérieur des faces 3 à 10 et pourvue d'un prolongement 16a à l'opposé de l'ouverture du tronçon de gaine 1 ou 2, une seconde aile 17, orthogonale à la première et dirigée vers l'extérieur, affleurant l'ouverture des tronçons de gaine 1 ou 2, et une partie 18 prolongeant l'aile 17 et formant ladite cavité intérieure. La partie 18 se termine par un rebord 19 en regard de l'aile 16, les faces 3 à 10 étant pressées entre le rebord 19 et l'aile 16. De plus, le bord des faces 3 à 10 vient en appui contre la face intérieure de l'aile 17.

Ainsi, on obtient une construction en poutre particulièrement

0014123

rigide et solide.

Les pièces d'angles 14 sont pourvues de trous 20 pour le passage de boulons d'assemblage (non représentés) solidarisant les cadres 11 et 12 ensemble.

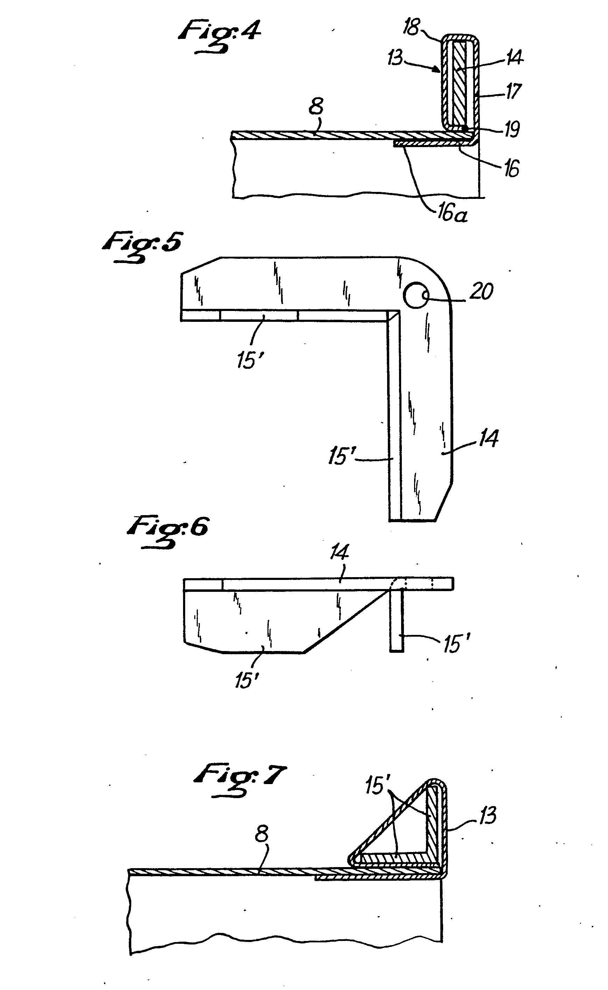

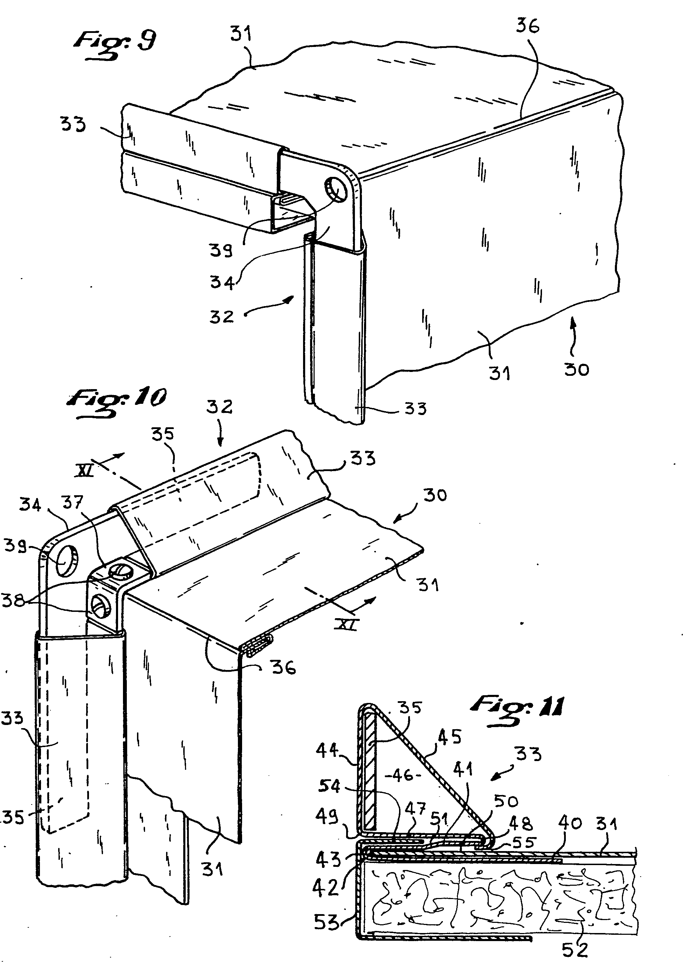

Dans le mode de réalisation des figures 5 et 6, les pièces d'angle 14 comportent des ailes 15' sur la totalité de la longueur de leurs branches. Dans ce cas, (voir la figure 7), les côtés 13 sont formés de profilés à section triangulaire pour permettre d'y loger les deux ailes 15' orthogonales.

La figure 8 montre une forme avantageuse de la section d'un profilé 13. Un tel profilé comporte une première aile 20 venant s'appliquer sur la face intérieure des tronçons de gaine, et une seconde aile 21 reliée à la première par un coude 22 qui sert de butée au bord de la gaine, lesdites ailes 20 et 21 délimitant entre elles une fente 23 pour l'introduction d'une face de gaine 3 à 10. Ladite seconde aile 21 est appliquée sur la face extérieure desdits tronçons de gaine et est prolongée vers l'extérieur et vers l'extrémité du tronçon de gaine par une partie 24, elle-même prolongée par une troisième aile 25 au moins sensiblement orthogonale auxdites première et seconde ailes 20 et 21, et dirigée vers celles-ci. La troisième aile 25 est prolongée par un rebord 26, replié vers l'intérieur du profilé et sensiblement au contact de la seconde aile 21.

L'extrémité de tronçon de gaine de ventilation 30, montrée par les figures 9 et 10, est formée de quatre parois planes 31 orthogonales deux à deux. Sur ces figures, seules deux parois 31 consécutives sont partiellement représentées.

Pour pouvoir assembler le tronçon de gaine 30 à un autre (non représenté) de façon à former une gaine continue, on monte, de la façon décrite ci-dessus, une bride 32 à l'extrémité dudit tronçon de gaine 30. Pour cela, on commence par former des brides 32, en forme de cadre constituées chacune de côtés 33, formés de profilés creux, et de pièces d'angle 34 en forme d'équerre, dont les branches 35 sont introduites à coulissement dans les profilés de deux côtés 33 consécutifs. Ensuite, les brides 32 sont mises en place sur les extrémités des tronçons 30 à réunir, de façon que leurs côtés 33 s'appliquent sur la face extérieure des parois 31 et que les pièces d'angle 34 se trouvent à cheval sur une arête 36 reliant deux parois 31. Chaque pièce d'angle 34, qui comporte une équerre à plat 37 dont elle est solidaire, est alors solidarisée des parois 31, par exemple grâce à des vis autoforeuses 38, traversant des trous de l'équerre 37 et s'ancrant dans les parois 31. Enfin, deux brides en regard appartenant à des tronçons de gaine 30 différents sont assemblées au moyen de boulons (non représentés) traversant des trous 39 prévus dans les pièces d'angle 34.

La figure 11 montre la section des profilés formant chacun des côtés 33 des brides 32. Ces profilés comportant une première aile 40 venant s'appliquer sur la face intérieure d'une paroi 31 du tronçon de gaine 30, une seconde aile 41 reliée à la première aile 40 par un premier coude 42 au moins approximativement à 180°, qui sert de butée au bord 43 de la paroi 31, et appliquée en partie sur la face extérieure de celle-ci, une troisième aile 44 sensiblement orthogonale aux ailes 40 et 41, et une partie 45 prolongeant la troisième aile 44 et ménageant un espace intérieur 46 pour recevoir les branches 35 des pièces d'angle 34.

Le profilé comporte de plus une quatrième aile 47, sensiblement parallèle aux ailes 40 et 41 et reliée à la seconde aile 41, du côté opposé au premier coude 42, par un second coude 48 au moins approximativement à 180°, lesdits coudes 42 et 48 étant de sens opposés, tandis que la troisième aile 44 est reliée à la quatrième aile 47, du côté opposé au coude 48, par un troisième coude 49, au moins approximativement à 90°, ce troisième coude 49 étant de sens opposé au seconde coude 48.

Ainsi, outre la fente 50 destinée à servir de logement au bord des parois 31 et ménagée entre les ailes 40 et 41, on obtient, entre l'aile 41 et l'aile 47, une seconde fente 51, ouverte vers l'extérieur, susceptible de servir de moyen d'accrochage d'un élément de calorifugeage. Bien entendu, les profilés 33 décrits peuvent être utilisés lorsqu'aucun élément de calorifugeage est prévu, leur structure leur permettant d'être utilisés aussi bien avec que sans calorifugeage. Dans le cas où un tel calorifugeage doit être disposé à l'intérieur des gaines 30, on agence des plaques 52 de matière calorifuge contre la face intérieure des parois 31, et les bords de ces plaques 52 sont maintenus par des profilés 53, par exemple à section en U rectangulaire, dont une branche 54 est engagée dans la fente 51.

De préférence, du côté opposé à l'aile 44, la partie 45 est pourvue d'un rebord 55 replié vers l'intérieur 46 du profilé et le second coude 48 s'appuie sensiblement sur la face intérieure du rebord 55. On obtient ainsi une structure de profilé particulièrement rigide.

REVENDICATIONS

1.- Procédé pour le raccord de deux tronçons (1,2) de gaine de circulation de fluide par mise en place sur les extrémités en regard des tronçons à réunir de brides formées par des cadres (11,12) constitués de profilés creux (13) et de pièces d'angle (14) en forme d'équerre, dont les branches sont introduites dans deux profilés consécutifs, puis par solidarisation des pièces d'angle en regard des deux brides, caractérisé en ce que les pièces d'angles (14) sont solidaires du tronçon de gaine (1,2) correspondant, alors que lesdits profilés (13) ne sont pas fixés sur les tronçons de gaine.

2.- Procédé selon la revendication 1, dans lequel on utilise des profilés creux (13) comportant une fente longitudinale (23) dans laquelle est introduite l'extrémité de la face (8) de tronçon de gaine correspondante, de façon que chaque bride se trouve à cheval sur le bord de l'ouverture du tronçon de gaine correspondant, chaque profilé comportant une partie (22) , telle qu'un pli ou une face venant sensiblement à fleur du bord de gaine correspondant, caractérisé en ce que le bord de la gaine est amené en butée contre ladite partie du profilé (22).

3.- Dispositif pour la mise en œuvre du procédé spécifié sous l'une des revendications 1 ou 2, caractérisé en ce que chaque pièce d'angle (14,34) comporte des moyens (15,37,38) permettant une solidarisation sur les tronçons de gaine .

4.- Dispositif selon la revendication 3, caractérisé en ce que lesdits moyens sont des pattes (15,37) s'appliquant à plat sur les faces extérieures des tronçons de gaine.

5.-Dispositif selon la revendication 2, dans lequel les profilés comportent une fente pour faciliter l'introduction de l'extrémité des faces des tronçons de gaine, caractérisé en ce que l'un des bords de la fente comporte un prolongement extérieur destiné à passer du côté intérieur desdites faces, tandis que l'autre bord de la fente comporte une partie repliée en direction de l'intérieur du profilé.

6.- Dispositif selon la revendication 2, caractérisé en ce que les profilés formant les brides comportent une première aile venant s'appliquer sur la face intérieure des tronçons de gaine, une seconde aile reliée à la première par un premier coude au moins approximativement à 180°, qui sert de butée au bord de la gaine, et appliquée au moins en partie sur la face extérieure desdits tronçons de gaine, une troisième aile au moins sensiblement orthogonale auxdites première et seconde ailes , et une partie prolongeant la troisième aile et ménageant un espace intérieur pour recevoir les branches des pièces d'angle.

7.- Dispositif selon la revendication 6, caractérisé en ce que ledit profilé comporte de plus une quatrième aile, au moins sensiblement parallèle auxdites première et seconde ailes, et reliée à ladite seconde aile, du côté opposé audit premier coude, par un seconde coude au moins approximativement à 180°, lesdits premier et second coudes étant de sens opposés, tandis que ladite troisième aile est reliée à ladite quatrième aile, du côté opposé audit second coude, par un troisième coude au moins approximativement à 90°, ce troisième coude étant de sens opposé audit second coude.

8.- Dispositif selon la revendication 7, caractérisé en ce que du côté opposé à la troisième aile, ladite partie prolongeant celle-ci est pourvue d'un rebord replié vers l'intérieur du profilé et ledit second coude s'appuie sensiblement sur la face intérieure dudit rebord.

9.- Dispositif selon l'une des revendications 7 ou 8, caractérisé en ce qu'il comporte de plus des profilés susceptibles de maintenir les bords transversaux de plaques de matière calorifuge appliqués contre les faces intérieures du tronçon de gaine et de venir s'introduire dans la fente ménagée entre la seconde et la quatrième aile, pour solidariser lesdites plaques desdits tronçons de gaine.

0014123

10.-Dispositif selon la revendication 4, caractérisé en ce que lesdites pattes ne s'étendent que sur une partie de la longueur des branches des équerres, à partir de l'angle de celles-ci, et seules les parties des branches ne comportant pas de pattes sont introduites dans lesdits profilés.

0014123

1/3

Fig.1

Fig.2

Fig.3

Fig.8

0014123

Fig.4

18

13

14

17

19

16

8

16a

Fig.5

20

15'

15'

14

Fig.6

14

15'

15'

Fig.7

15'

13

8

Fig. 9

Fig. 10

Fig. 11